# FASCICULE DE BREVET EUROPEEN

(11) **EP 3 648 609 B1**
(45) Date de publication et mention de la délivrance du brevet: **08.09.2021**
(21) Numéro de dépôt: 18737607.4
(22) Date de dépôt: 04.07.2018
(51) Int. Cl.: A21B 5/03, A21C 5/00

(54) **DISPOSITIF POUR ETALER UNE PATE ALIMENTAIRE COULANTE SUR UNE PLAQUE DE CUISSON**
VORRICHTUNG ZUM VERTEILEN EINER FLIESSFÄHIGEN TEIGMASSE AUF EINER KOCHPLATTE
DEVICE FOR SPREADING A POURABLE FOOD BATTER ON A COOKING PLATE

(30) Priorité: 07.07.2017 FR 1770726; 29.11.2017 FR 1771276
(43) Date de publication de la demande: 13.05.2020
(73) Titulaire: Concept-Maintenance, 22520 Binic (FR)
(72) Inventeur: DAUBERTAIS, Frédéric, 22520 Binic (FR)
(74) Mandataire: Cabinet Le Guen Maillet
(86) Numéro de dépôt international: PCT/EP2018/068143
(87) Numéro de publication internationale: WO 2019/008065

(56) Documents cités:
- EP-A1- 3 146 844
- FR-A1- 2 688 657
- JP-A- 2012 254 033

## Description

La présente invention concerne un dispositif pour étaler une pâte alimentaire coulante sur une plaque chauffante pour fabriquer des galettes ou des crêpes.

Il est connu depuis au moins le treizième siècle de fabriquer des galettes en étalant une pâte alimentaire sur une plaque de métal chauffée.

De nos jours, il est connu un ustensile populaire pour étaler la pâte. Cet ustensile baptisé « rozell » est une sorte de racloir muni d'un manche et que l'utilisateur fait tourner sur la pâte pour l'étaler et la surfacer sur la plaque chauffée. Ce geste nécessite de la pratique pour le mener à bien. Lors de l'action mécanique de l'ustensile, l'utilisateur définit l'épaisseur de la galette, de la crêpe et son diamètre. Le travail de raclage de l'ustensile forme également un empilement de couches de la pâte.

La cuisson surfacée à la main permet une cuisson à haute température et l'empilage des couches de pâte à des moments de cuisson différents, pendant le cycle très court d'étalement qui ne dure pas plus que trois secondes en général. Ce type de cuisson libère les saveurs des ingrédients constitutifs de la pâte. Le fait de plaquer la pâte sur la zone de cuisson a pour effet de diminuer le temps de cuisson, en améliorant le transfert de calories. Le choix de la bonne température de saisissement, comme le fait d'étager la cuisson, sont des variables qui composent le bon geste de la personne qualifiée dans l'art de faire des galettes. Il en résulte un travail qualitatif.

En outre, ce mode d'étalement implique une proximité directe de la main et de l'avant bras au-dessus de la pâte, ce qui peut entraîner dans la fabrication des produits, un manque d'hygiène, et dont le niveau d'exigence est très élevé dans le domaine de l'industrie alimentaire.

Pourtant le marché de la galette, de la crêpe, du type « fait main » est en plein essor car le goût, la texture, sont au rendez-vous avec la demande des consommateurs.

Donc actuellement, le travail à la main est le meilleur gage d'avoir une qualité gustative optimale.

En outre, le travail à la main génère d'autres inconvénients : ce geste est très contraignant en termes de TMS (troubles musculo-squelettiques) et demande une précision élevée. Le taux de perte issue de ce travail répété à la main est significatif du fait de cette difficulté et le personnel est de plus en plus difficile à trouver ou à garder.

Ces constats ont incité les inventeurs à concevoir des machines pour palier ces inconvénients. On connaît ainsi une machine à faire des crêpes, publiée dans la demande FR-A-2 204 946. La machine se compose d'un bâti supportant une plaque chauffante horizontale, et muni de rails horizontaux s'étendant de part et d'autre de ladite plaque chauffante et sur lesquels peut rouler un chariot en le déplaçant manuellement à l'aide d'une poignée. Le chariot porte une trémie destinée à contenir de la pâte à crêpes. La trémie présente à sa partie inférieure, deux lèvres déterminant une fente de distribution de ladite pâte. La trémie comporte un levier de commande de fermeture et d'ouverture de la fente de distribution. Le chariot porte un réservoir de pâte muni d'un dispositif à niveau constant de remplissage de la trémie. La machine procure une cuisson uniforme des crêpes sans avoir à les retourner. Cependant la machine n'est pas capable de reproduire le tour de main d'un crêpier ou d'une crêpière.

Cette machine ne donne satisfaction qu'en relation avec des pâtes de consistance bien déterminée à l'état cru, et ne peuvent être associées qu'à des types bien déterminés de machines automatiques de cuisson.

Les problèmes posés sur ce type de doseur-étaleur sont les suivants :
Les bords de la crêpe ainsi formés, restent sensiblement de la même épaisseur que le centre. De ce fait, il y a une forte probabilité qu'il y ait une différence de cuisson entre le bord extérieur et le centre du fait que la zone de cuisson, soit refroidie de façon hétérogène par la pâte froide crue déposée au centre de la plaque de chauffe. En conséquence, soit les bords sont friables donc ceci pose des problèmes à la préhension, au pliage, au convoyage, au conditionnement et aussi à la conservation, soit la cuisson au centre n'est pas suffisante et des moisissures peuvent apparaître quelques jours après le conditionnement.

La consistance requise de la pâte pour obtenir une crêpe ou une galette convenable demande une texture de pâte particulièrement précise.

Autre problématique connue, les pâtes sans gluten (la 100 % blé noir à titre d'exemple non limitatif), posent des problèmes d'étalement. Ce principe étire la pâte mais ne la surface pas (les industriels doivent jouer sur l'ajout de gluten et/ou abaisser les températures, afin qu'ils puissent réaliser leur produit avec cet étaleur.

Aussi, l'aspect uniforme des crêpes ou galettes ainsi formées, donne un aspect visuel « industriel » qui ne séduit pas les consommateurs à la recherche d'authenticité.

Cette machine nécessite un marbre de table de cuisson parfaitement plan. De ce fait, par exemple, les anciens manèges à plaques sont usés de manière hétérogène par le déculottage et culottage journalier. Ces derniers ne sont pas compatibles avec ce doseur-étaleur en étant achetés d'occasion. Et lorsqu'ils sont neufs, cette usure normale qui survient rapidement vient altérer la précision du dosage-étalage. Ce doseur-étaleur demande que les plaques restent parfaitement planes, ce qui est utopique tant l'homme de l'art les racle souvent.

Le brevet FR-A- 2 700 923 propose un dispositif étaleur de pâte alimentaire sur une tuile chaude après dosage, pour confectionner des crêpes, galettes, blinis, pannequets, feuilles de bricks, ou dérivés. Le dispositif étaleur comprend un étaleur plan de forme curviligne, en forme de S, fabriqué en Téflon ® et qui est animé d'un mouvement de rotation par l'intermédiaire d'un moto-variateur électrique et il est disposé pour répartir la pâte du centre vers l'extérieur sur la tuile chaude. La pâte est acheminée dans l'axe de rotation du dispositif pour être déposée au centre de la tuile.

Trois vérins amortisseurs à sabot, assurent une descente douce du dispositif étaleur ainsi que la précision de la position de l'étaleur par rapport à la tuile. Le dosage est conçu à partir d'une pompe volumétrique, à clapets commandés, de type électrovanne.

Le dispositif étaleur est monté dans un équipage mobile conçu pour suivre de manière cyclique le mouvement de déplacement circulaire de chacune des tuiles constitutives d'un manège. Le déplacement de l'équipage mobile est mis en œuvre par l'intermédiaire de rails de guidage et d'un vérin. Il est réalisé à l'extérieur du manège.

Un inconvénient de ce dispositif étaleur est l'encrassement du Téflon ® difficile à maîtriser et le système d'accompagnement par l'extérieur complexe. Il faut considérer aussi la dilatation relativement importante du racleur en Téflon ® qui est contraignante pour obtenir un réglage précis de celui-ci et limite la durée de ce réglage. Ce dispositif se contente d'étaler la pâte sur la tuile de cuisson.

Le brevet FR-A1-2 665 381 présente un dispositif d'étalement d'une pâte coulante sur une face de cuisson. Il possède une rampe tournante diffusant de l'air sous pression sur un pâton préalablement déposé sur la face de cuisson.

Ce dispositif ne fait qu'étaler par utilisation d'air comprimé, le pâton sur la face de cuisson.

On connaît encore à la lecture du document JP-A-2012 254033, un instrument pour étirer une pâte à crêpe sur une plaque de cuisson.

L'instrument comprend, un arceau en forme de U retourné, défini par une plaque horizontale et deux plaques verticales qui prennent appui sur la plaque de cuisson.

L'arceau supporte en son milieu, un arbre rotatif qui s'étend verticalement en prenant appui au centre de la surface de cuisson. Une spatule s'étend horizontalement au-dessus de la surface de cuisson. La spatule est montée dans un support en équerre qui est fixé sur une tige tenue dans un cube qui entoure l'arbre. Celui-ci se prolonge de l'autre côté du cube par une tige d'entraînement à rotation qui est terminée par une poignée. La tige peut coulisser verticalement dans un palier fixé sur la plaque horizontale. La spatule est décalée de l'arbre d'une distance « A » qui est au minimum de 4 mm. En vue de face, la spatule s'étend de part et d'autre de l'arbre rotatif. La distance « B » séparant la spatule de la surface de cuisson est comprise entre 2 et 5 mm. La partie distale de la spatule est pourvue d'un rebord en portion de cercle délimitant le diamètre de la crêpe.

Aussi, connaissant cet état de l'art, le demandeur a cherché à concevoir un dispositif pour étaler une pâte alimentaire sur une plaque de cuisson qui puisse procurer un travail de la pâte qui soit comparable avec l'utilisation d'un rozell par un professionnel pour répondre à l'attente de la clientèle mais qui puisse aussi être utilisé de manière industrielle, c'est-à-dire pour des volumes de production importants tout en conservant une qualité de fabrication constante.

A cet effet, est proposé un dispositif pour étaler une pâte alimentaire coulante sur une plaque de cuisson pour fabriquer des galettes ou des crêpes, comprenant un arbre rotatif destiné à être disposé de manière quasi perpendiculaire par rapport à la face de cuisson de la plaque chauffante, une platine fixée sur ledit arbre rotatif, ladite platine portant un moyen d'étalement et de raclage, au moins une butée conçue pour prendre appui et rouler ou glisser sur la face chauffante de la plaque de cuisson ; selon l'invention, le moyen d'étalement et de raclage comprend au moins un racloir dont le bord libre de travail est rectiligne permettant d'une part, d'étaler un pâton préalablement déposé sur la face chauffante de ladite plaque de cuisson et, d'autre part, de racler l'épaisseur de pâte tant qu'elle demeure liquide de manière à redéposer une couche de matière en amont pour feuilleter la pâte et boucher les trous, en reproduisant le geste d'une personne qualifiée dans l'art de faire des galettes ou des crêpes.

Le racloir peut être disposé à une hauteur bien précise par rapport à la surface de chauffe de la plaque de cuisson pour étaler le pâton et travailler la pâte pendant le début de sa cuisson.

Selon une caractéristique additionnelle de l'invention, le dispositif pour étaler une pâte alimentaire coulante, comprend, un premier racloir porté par ladite platine et un second racloir porté sur une seconde platine, le bord libre du premier racloir étant disposé de manière pratiquement sécante à l'axe de l'arbre rotatif, le bord intérieur du premier racloir s'étendant au moins jusqu'à l'axe dudit arbre, la seconde platine étant reliée à la première platine par l'intermédiaire de moyens de réglage en hauteur, en considérant le dispositif dans sa position d'utilisation.

Le premier racleur permet d'étaler le pâton sur la plaque de cuisson alors que le second racleur sert à étaler la pâte et aussi de délimiter le diamètre de la galette. Cependant, la fonction essentielle de ce second racleur est de fabriquer la galette pendant sa cuisson en exerçant une pression sur la pâte afin de torréfier le film de pâte en contact avec la plaque de cuisson et en raclant l'épaisseur de pâte tant qu'elle demeure liquide de manière à redéposer une couche de matière en amont pour feuilleter la pâte et boucher les trous, à l'instar du geste d'une personne qualifiée dans l'art de faire des galettes. Le réglage en hauteur de la seconde platine permet d'adapter le dispositif de l'invention à chacune des recettes de galettes ou de crêpes.

Avantageusement, les moyens de réglage comprennent des boulons reliant les deux platines et des ressorts interposés entre les deux platines de sorte à procurer un montage flottant de la seconde platine.

Ce montage flottant du second racloir évite la formation de vagues dans la structure de la galette, de la crêpe, en exerçant une pression sensiblement constante sur celle-ci.

Selon une caractéristique additionnelle de l'invention, ledit ou chaque racloir est disposé de manière inclinée par rapport à un plan tangent perpendiculairement à ladite butée et dont l'angle est compris entre 20 degrés et 30 degrés.

La valeur de cette inclinaison procure des résultats satisfaisants en ce qui concerne le raclage de la pâte pour réaliser un feuilletage de celle-ci pendant sa cuisson.

Selon une caractéristique additionnelle de l'invention, le second racloir est monté sur un support assemblé sur la seconde platine, par l'intermédiaire d'un moyen de fixation d'axe parallèle à celui de l'arbre rotatif, autorisant un réglage angulaire dudit support par rapport à cette seconde platine.

Cette faculté de pouvoir orienter le second racloir permet de répartir précisément l'étalement de la pâte entre le centre et la périphérie suivant la recette de la pâte, en agissant sur la vitesse d'éjection de la pâte vers la périphérie.

Selon une caractéristique additionnelle de l'invention, ledit ou chaque racloir est constitué d'une feuille de silicone ou est constitué de plusieurs feuilles de silicone superposées.

Cette matière a été choisie pour son innocuité alimentaire, sa bonne tenue en température, sa souplesse et sa bonne tenue à l'encrassement.

Selon une caractéristique additionnelle de l'invention, une masselotte est fixée sur le support du second racloir de sorte que son bord libre puisse exercer une pression de travail prédéfinie sur la pâte en cours de cuisson pendant la fabrication de la galette ou de la crêpe.

La masse de la masselotte a une influence sur l'épaisseur de la galette, de la crêpe, et sur la rapidité de sa cuisson.

Selon une caractéristique additionnelle de l'invention, le second racloir est pourvu sur son bord latéral extérieur d'un arrêtoir destiné à délimiter le périmètre d'étalement maximum de la pâte en définissant de la sorte le diamètre de la galette.

Le diamètre de la galette, de la crêpe, est défini avec précision.

Selon une caractéristique additionnelle de l'invention, le dispositif pour étaler une pâte alimentaire coulante, comprend, trois butées respectivement constituées de trois roulements à billes et dons les axes sont sécants à l'axe de l'arbre.

Le dispositif peut ainsi rouler parfaitement sur la périphérie de la plaque de cuisson.

Selon une caractéristique additionnelle de l'invention, l'arbre est relié à un moyen d'entraînement à rotation.

Le ou les racleurs sont entraînés à rotation pour étaler le pâton et travailler la pâte sur la plaque de cuisson.

Fait partie également de l'invention, un ensemble comprenant un manège pourvu :
- d'une table tournante montée à rotation autour d'un axe vertical en considérant la position de fonctionnement dudit manège, la table portant une pluralité de plaques de cuisson réparties à sa périphérie,
- un bras pivotant dont l'axe de rotation est coaxial avec celui de la table tournante, le bras pivotant comprenant une première partie portant l'axe d'articulation dudit bras, une seconde partie mobile verticalement par rapport à la première partie par l'intermédiaire d'un moyen de guidage linéaire et à l'encontre d'un moyen de manœuvre linéaire. L'extrémité distale de la seconde partie du bras pivotant porte un dispositif pour étaler une pâte alimentaire coulante qui est décrit ci-avant.

Le manège permet de fabriquer en continu des galettes ou des crêpes.

Selon une caractéristique additionnelle de l'invention, la table tournante est pourvue d'une couronne centrée sur son axe de rotation, ladite couronne étant percée à sa périphérie d'une pluralité de trous d'axe vertical qui sont répartis angulairement, la seconde partie étant pourvue d'un plot conique qui vient, pendant le mouvement de descente de cette seconde partie, prendre place et se positionner dans un trou correspondant, le bras pivotant étant relié à un moyen de manœuvre conçu pour le faire pivoter angulairement autour de son axe de rotation.

Le bras pivotant déplace le dispositif d'étalement séquentiellement sur chaque plaque de cuisson. Le dispositif pour étaler demeure parfaitement indexé à la table tournante, pendant son travail sur une plaque de cuisson correspondante.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue latérale d'un dispositif pour étaler une pâte alimentaire sur une plaque de cuisson selon l'invention,
la Fig. 2 représente une vue de dessus d'un dispositif pour étaler une pâte alimentaire sur une plaque de cuisson selon l'invention,
La Fig. 3 représente une vue en perspective d'un manège de fabrication de galettes, de crêpes, incluant un dispositif pour étaler une pâte alimentaire sur une plaque de cuisson et qui est monté sur un bras articulé selon l'invention et,
La Fig. 4 représente une vue agrandie en perspective d'un manège de fabrication de galettes, de crêpes, incluant un dispositif pour étaler une pâte alimentaire sur une plaque de cuisson et qui est monté sur un bras pivotant selon l'invention d'un bras.

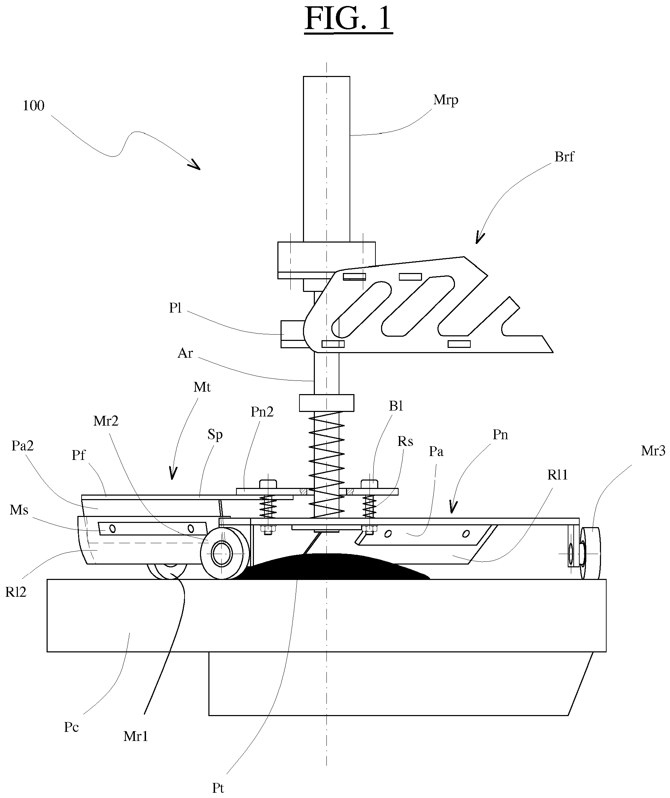

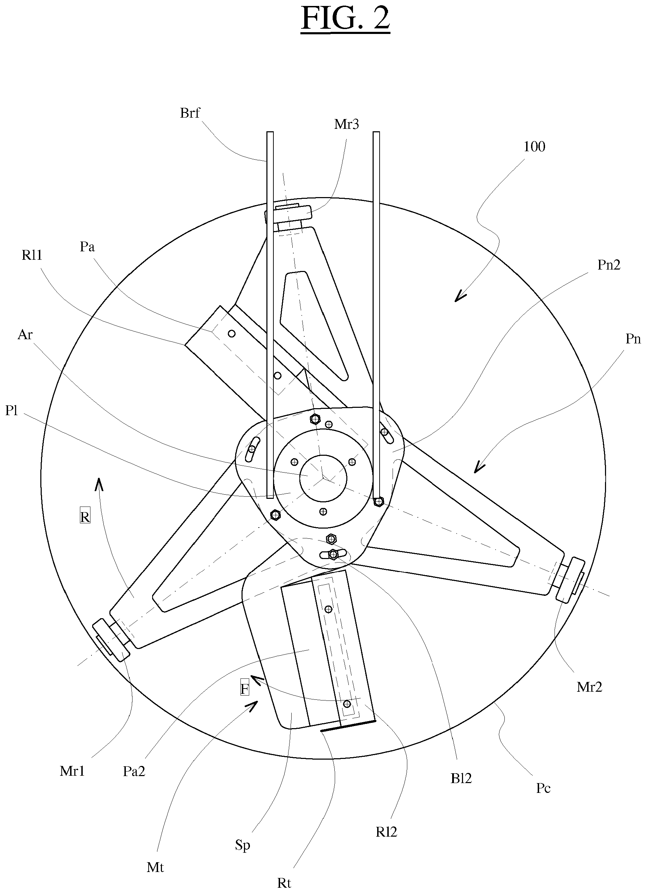

Le dispositif 100 présenté sur les Figs. 1 et 2 est destiné à étaler une pâte alimentaire sur une plaque de cuisson, pour fabriquer notamment des galettes, des crêpes, des blinis. Par soucis de simplification d'écriture, tous ces gâteaux ronds et plats sont dénommés galettes dans la suite de cette description.

Il peut fonctionner de manière autonome avec un bilig ou être asservi au fonctionnement d'un manège destiné à la fabrication en continu de galettes. Un tel manège comprend une pluralité de plaques chauffantes qui sont installées sur une table tournante pour produire en continu des galettes ou bien encore un carrousel constitué d'un disque fabriqué en fonte et le plus souvent chauffé à la flamme. Les différentes étapes de la fabrication d'une galette sont réalisées aux différents postes que comportent le manège. Ces étapes sont notamment : la dépose d'un pâton, son étalement, sa cuisson, l'enlèvement de la galette et le nettoiement/graissage de la plaque de cuisson.

Le système d'étalement est séparé du système de dosage qui est préférentiellement un dosage volumétrique avec une dépose gravitaire. Le système de dosage peut encore inclure une pompe à piston. Le fait de dissocier le dosage du système d'étalement permet de fiabiliser la stabilité de la galette en termes de poids et de niveau de cuisson.

Le dispositif 100 comprend un arbre de rotation Ar qui porte à une extrémité une platine Pn portant au moins une butée adaptée pour prendre appui et rouler ou glisser sur une plaque de cuisson Pc. Ladite ou chaque butée est préférentiellement constituée d'un roulement à billes. Elle peut cependant être constituée d'un patin.

La plaque de cuisson Pc est conventionnellement une plaque métallique chauffée par une résistance électrique ou par une flamme. Elle présente une face de travail plane, préférentiellement circulaire qui est disposée horizontalement lorsque la plaque de cuisson est en service.

L'arbre de rotation Ar est positionné verticalement au dessus de la plaque de cuisson Pc, par l'intermédiaire d'un palier Pl conçu pour autoriser un mouvement de rotation et un mouvement de translation dudit arbre Ar dans celui-ci. L'axe de l'arbre Ar est ainsi disposé de manière pratiquement perpendiculaire à la face de cuisson de la plaque de cuisson.

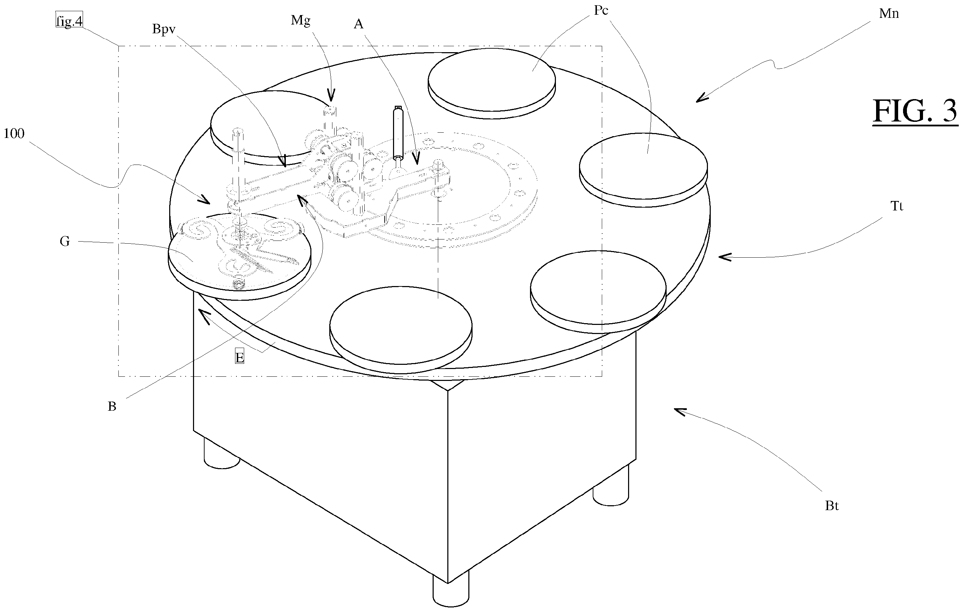

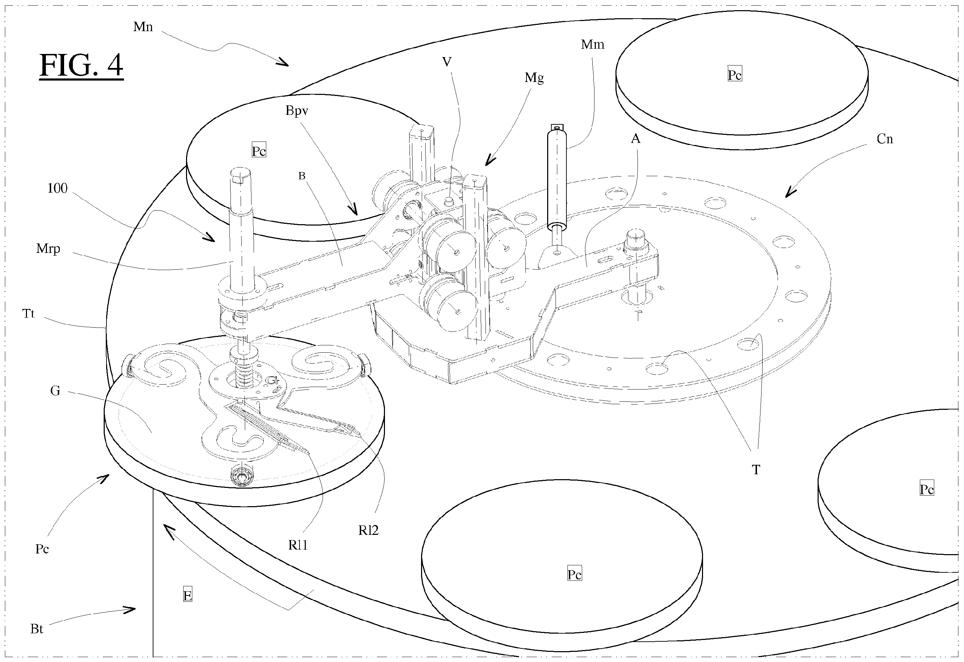

Le palier Pl est tenu, soit dans un bras fixe Brf dans le cas d'une utilisation du dispositif 100 conjointement avec une plaque de cuisson unique de type bilig comme cela apparaît sur ces Figs. 1 et 2, soit un bras pivotant, quand le dispositif 100 est utilisé avec un manège et qui est expliqué en détails ci-après en référence aux Figs. 3 et 4.

L'arbre Ar est relié à un moyen d'entraînement à rotation qui est préférentiellement un moteur rotatif pneumatique Mrp qui est montré sur la Fig. 1.

Le mouvement de translation de l'arbre Ar est mis en œuvre par l'intermédiaire d'un moyen de manœuvre qui est préférentiellement un vérin pneumatique à simple effet non représenté. Le vérin est monté de sorte que lorsqu'il est alimenté, il soulève le dispositif 100 alors que sa chambre est reliée à l'échappement, le dispositif descend par gravité. Le vérin à simple effet peut cependant être remplacé par un vérin à double effet et dont le mouvement de descente est régulé par l'intermédiaire d'un limiteur de vitesse.

La platine Pn est formée d'une plaque de préférence plane et montée perpendiculaire à l'axe de l'arbre Ar. La platine Pn forme en vue de dessus une étoile à trois branches. Son périmètre est ainsi délimité par trois sommets sur lesquels sont respectivement fixés trois moyens de roulement Mrl, Mr2 et Mr3. Les axes de ces moyens de roulement Mr sont sécants à l'axe de l'arbre Ar. Ainsi, la platine Pn est en mesure de tourner sur la plaque chauffante tout en demeurant positionnée à distance constante de celle-ci. Le fait de référencer la platine Pn sur trois points isostatiques sur la plaque de cuisson permet de compenser au moins en partie leur degré d'usure.

Le dispositif 100 est équipé d'un moyen d'étalement et de raclage Mt conçu pour travailler pendant sa rotation sur la plaque de cuisson Pc. Il est destiné, d'une part, à étaler un pâton Pt sur la plaque de cuisson en fonctionnement et préalablement déposé sur celle-ci et, d'autre part, à travailler la pâte en cours d'étalement de manière à former et étager des couches sur la plaque de cuisson afin de fabriquer une pâte feuilletée, par brassage de la pâte et en incorporant de l'air dans celle-ci.

Le moyen d'étalement et de raclage Mt comprend au moins un racloir Rl qui est fixé sur la platine Pn.

Le moyen d'étalement et de raclage Mt comprend deux racloirs Rl1 et Rl2.

Le premier racloir Rl1 sert principalement à étaler un pâton Pt sur la plaque de cuisson Pc. Il est fixé directement sur la platine Pn.

Le second racloir Rl2 sert également à étaler la pâte et délimiter le diamètre de la galette, mais est utilisé essentiellement pour fabriquer la galette pendant sa cuisson en exerçant une pression sur la pâte afin de torréfier le film de pâte en contact avec la plaque de cuisson Pc et en raclant l'épaisseur de pâte tant qu'elle demeure liquide de manière à redéposer une couche de matière en amont pour feuilleter la pâte et boucher les trous, à l'instar du geste d'une personne qualifiée dans l'art de faire des galettes.

L'utilisation d'un seul racloir Rl1 comme moyen d'étalement et de raclage Mt convient pour la fabrication de galettes à partir d'une pâte d'une composition et d'une consistance unique.

Le premier racloir Rl1 est constitué d'au moins une feuille fabriquée en silicone qui est fixée sur une patte Pa prolongeant vers le bas et de manière inclinée, une branche de la platine Pn. La patte Pa est plane et le premier racloir Rl1 est fixé sur celui-ci en étant appliqué à plat. Le bord libre de travail du racloir Rl1 est rectiligne pour étaler le pâton et travailler la pâte.

De préférence, plusieurs feuilles de silicone superposées constituent le premier racloir Rl1 lorsque la pâte est relativement épaisse.

Ce premier racloir Rl1 est fixé par exemple par l'intermédiaire d'une paire de boulons sur ladite patte. Le racloir Rl1 s'étend ainsi de manière inclinée et vers le bas en direction de la surface de cuisson de la plaque Pc. La patte inclinée est disposée de sorte que la droite sécante au bord libre du racloir Rl1 puisse être disposée de manière pratiquement sécante à l'axe de l'arbre Ar, comme le montre la Fig. 2. Le bord intérieur du racloir Rl1 s'étend au moins jusqu'à l'axe de l'arbre Ar et de préférence un peu au-delà dudit axe pour éviter la formation d'une surépaisseur au centre de la galette pendant sa fabrication.

Le matériau souple constitutif du racloir Rl1 permet à celui-ci de s'adapter à la disparité des géométries des plaques, notamment liée à leur usure.

Le montage du second racloir Rl2 est réalisé de manière à ce que la position de celle-ci puisse être réglée par rapport à l'arbre Ar et plus précisément par rapport à la platine Pn. Ce réglage permet d'adapter la fabrication des galettes en fonction de la recette de la pâte et en fonction des désirs de la clientèle. Une fois le réglage réalisé, le fonctionnement du dispositif 100 demeure constant, permettant de fabriquer en continu la même qualité de galette.

La structure de ce second racloir Rl2 est semblable au premier racloir Rl1.

Sur la Fig. 1, le second racloir Rl2 est ainsi monté sur un support Sp solidaire d'une seconde platine Pn2 qui est disposée au-dessus de la première platine Pn. La seconde platine Pn2 est reliée à la première platine Pn, par l'intermédiaire de moyens de réglage en hauteur tels que des boulons Bl reliant les deux platines et des ressorts Rs interposés entre les deux platines et qui sont préférentiellement montés sur les tiges des boulons Bl. On peut de la sorte abaisser ou remonter le niveau de la seconde platine Pn2 par rapport à la première platine et réaliser une inclinaison de cette seconde platine Pn2 par rapport à la première. Ce montage flottant du second racloir Rl2 évite la formation de vagues dans la structure de la galette en exerçant sur celle-ci une pression sensiblement constante de raclage.

Le support Sp est formé d'une plaque de fixation Pf pourvue d'une patte plane Pa2 qui la prolonge vers le bas et de manière inclinée et sur laquelle est fixée le second racloir R12, par exemple à l'aide d'une paire de boulons. La plaque de fixation Pf est fixée sur la seconde platine Pn2 par l'intermédiaire d'un moyen de fixation autorisant un réglage angulaire dudit support Sp par rapport à cette seconde platine Pn2. La flèche F indique, sur la Fig. 2, l'orientation possible du support Sp.

Sur la Fig. 2, ce moyen de fixation est constitué d'un boulon B12 dont l'axe est parallèle à celui de l'arbre rotatif Ar. On peut ainsi orienter le second racloir Rl2. Cette possibilité permet de répartir précisément l'étalement de la pâte entre le centre et la périphérie suivant la recette de la pâte. Ce réglage permet de contrôler la vitesse d'éjection de la pâte vers l'extérieure du racloir en corrélation avec la vitesse de rotation des racloirs et de la pression qu'ils exercent sur la pâte.

L'angle d'inclinaison de chacune des deux pattes Pa et Pa2 et l'axe de l'arbre de rotation Ar est compris entre 20 degrés et 30 degrés avec une valeur préférentielle de 25 degrés. Cette inclinaison procure une efficacité intéressante entre l'étalement du pâton Pt et le raclage de la surface de la pâte en cours de cuisson.

Sur la Fig.1, on remarque la présence d'une masselotte Ms fixée sur le support Sp et préférentiellement au dos du second racloir Rl2 par l'intermédiaire des deux boulons pour appesantir ledit racloir afin que son bord libre puisse exercer une pression de travail prédéfinie sur la pâte en cours de cuisson pendant la fabrication de la galette. Le choix de la masselotte permet de définir l'épaisseur de la galette en fonction de la recette de la pâte. Il intervient également sur la rapidité de cuisson dès lors que le second racloir Rl2 est en mesure d'exercer une pression plus ou moins forte sur la pâte en cours d'étalement.

Sur la Fig. 2, le second racloir Rl2 est pourvu sur son bord latéral extérieur d'un arrêtoir Rt destiné à délimiter le périmètre d'étalement maximum de la pâte en définissant de la sorte le diamètre de la galette.

Suivant le réglage du second racloir Rl2, l'afflux de pâte à la périphérie de la galette en cours de cuisson peut créer une surépaisseur de matière ce qui s'avère parfois nécessaire pour obtenir une cuisson parfaitement homogène de la pâte. En effet, le dépôt du pâton au centre de la plaque de cuisson la refroidit localement pendant un court instant. Ce sur-couchage à la périphérie de la galette facilite également sa préhension et une meilleure tenue de la galette, ce qui est parfois une demande du consommateur.

Le fonctionnement du dispositif est décrit dans une version équipée de deux racloirs.

Le bras Brf du dispositif 100 est fixé à proximité de la plaque de cuisson Pc de sorte que son arbre Ar puisse être disposé de manière perpendiculaire à ladite plaque de cuisson et coaxialement à celle-ci. La plaque de cuisson est mise en chauffe, puis un pâton Pt est déposé sur le centre de la plaque.

Le dispositif 100 est mis en fonctionnement, le moteur pneumatique entraîne à rotation l'arbre Ar et entraîne à son tour la platine Pn comme le suggère la flèche R sur la Fig. 2 et le vérin pneumatique mis en purge provoque la descente de la platine Pn et les trois roulettes Mr viennent en appui et roulent sur le périmètre de la face chauffée de la plaque de cuisson.

Le premier racloir Rl1 étale le pâton en expandant sa surface en contact avec la plaque de cuisson. Le problème de l'œil qui peut se former au centre de la pâte en cours d'étalement est réglé par un montage flottant horizontal de l'arbre Ar du dispositif 100 au départ de l'étape d'étalement, puis à axe centré ensuite. On peut utiliser pour mettre en œuvre cette technique de centrage, un plot conique prenant place dans un trou correspondant. Un autre moyen pour parvenir à ce résultat consiste à utiliser un jet d'air ponctuel acheminé par une pipette sur le centre de la plaque de cuisson Pc.

Le second racloir R12, réglé correctement travaille à son tour pour expandre l'étalement de la pâte jusqu'à ce qu'il atteigne l'arrêtoir Rt.

Pendant leur rotation, les deux racloirs travaillent pour étager des couches de pâtes sur la plaque de cuisson afin de fabriquer une pâte feuilletée pendant la courte durée pendant laquelle la pâte demeure liquide. De l'air est incorporé dans la pâte. La matière est mélangée intimement. Le nombre de révolution des racloirs est typiquement de trois ou quatre tours, ce qui correspond à trois passages successifs des racloirs. La durée de ces trois ou quatre cycles est d'environ trois secondes. Le dispositif 100 pour étaler une pâte alimentaire coulante sur une plaque chauffante procure une cuisson des galettes qui se rapproche le plus au travail d'une personne professionnelle dans l'art de fabriquer des galettes.

Le travail des racloirs étale et plaque la pâte sur la surface de cuisson. Les constituants de la pâte sont intimement liés. Le travail des racloirs permet de torréfier le sucre dans le cas d'une recette de pâte à crêpes ou le blé noir constitutif d'une recette de pâte à galettes. Il libère les arômes. Il apporte à la galette ainsi fabriquée, un moelleux, un goût, une texture tout à fait comparable à une galette faite à la main.

Dans une variante de réalisation présentée sur la Fig. 3, le dispositif 100 pour étaler une pâte alimentaire coulante sur une plaque de cuisson est monté dans un manège Mn incluant une pluralité de plaques de cuisson Pc installées sur une table tournante Tt. Cette table tournante Tt est montée sur un arbre vertical tenu dans un bâti Bt. L'arbre est relié à un moyen d'entraînement à rotation tel qu'un motoréducteur conçu pour faire tourner la table Tt à vitesse continue. La flèche E indique le mouvement de rotation de la table Tt. La vitesse du motoréducteur est réglable. Sur cette Fig. 3, six plaques de cuisson sont disposées à la périphérie de la table tournante Tt. Leurs résistances chauffantes sont raccordées à une alimentation électrique dimensionnée pour les alimenter en courant pour les faire fonctionner.

Le manège Mn comprend également un bras pivotant Bpv et dont une extrémité est montée sur un pivot centré sur l'axe de l'arbre vertical de la table tournante Tt.

Le bras pivotant Bpv est construit en deux parties, une partie A dont une extrémité est montée sur le pivot et une partie B qui porte à son extrémité distale le dispositif 100.

Sur la Fig. 4, les deux parties A et B du bras pivotant Bpv sont réunies par l'intermédiaire d'un moyen de guidage linéaire Mg d'axe vertical dans la position de fonctionnement du manège Mn permettant à la partie B d'être levée ou abaissée par rapport à la partie A. Le moyen de guidage est constitué sur cette Fig. 4, d'une paire d'arbres de guidage, fixés sur la partie A et de trois paires de galets de roulement fixés sur la partie B et pouvant rouler en étant guidés sur les deux arbres de guidage.

Un moyen de manœuvre linéaire V, tel qu'un vérin pneumatique à simple effet est interposé entre la partie A et la partie B pour soulever ou abaisser le dispositif 100.

Sur cette Fig. 4, on remarque la présence d'une couronne Cn fixée sur la table Tt en étant centrée sur l'axe de son arbre vertical qui sert à indexer angulairement le bras pivotant Bpv afin que le dispositif 100 puisse descendre et travailler à tour de rôle sur chacune des plaques de cuisson Pc pour étaler un pâton et travailler la pâte, comme cela a été décrit ci-avant. La couronne Cn est percée à sa périphérie d'une pluralité de trous T d'axe vertical qui sont répartis angulairement autour de la couronne et en vis-à-vis des plaques de cuisson Pc. Il y a autant de trous que de plaques de cuisson Pc.

La partie B est pourvue d'un plot conique qui vient pendant le mouvement de descente de cette partie B prendre place et se positionner dans un trou T correspondant, quand le bras pivotant Bpv est correctement orienté. Ainsi, quand le bras est positionné de la sorte sur la table Tt, le dispositif 100 est positionné au dessus d'une plaque de cuisson Pc correspondante, comme cela apparaît sur cette Fig. 4. Le travail de la pâte et la cuisson de la galette G sont réalisés pendant la rotation de la table tournante Tt. Quand la partie B est soulevée, par l'intermédiaire du vérin V, le bras pivotant Bpv est désindexé de la table tournante et peut être déplacé angulairement pour être indexé à nouveau sur la couronne afin d'être orienté de la plaque de cuisson suivante. Le mouvement d'orientation angulaire de rappel du bras Bpv est mis en œuvre par l'intermédiaire d'un moyen de manœuvre Mm, tel qu'un vérin pneumatique à simple effet relié au bâtit Bt. Le vérin pneumatique est alimenté par un distributeur pneumatique de type 3/2 qui met à l'échappement la chambre du vérin pour que sa tige puisse accompagner le bras pivotant Bpv quand il est entraîné par la table tournante Tt.

Le manège Mn est aussi équipé d'une unité de dépose de pâton sur chacune des plaques de cuisson qui se succèdent mais qui n'est pas représenté. Cette unité de dépose de pâton se compose d'une trémie destinée à contenir la pâte pour la fabrication de galettes, d'un doseur chargé de déverser la pâte pour la formation d'un pâton sur ladite plaque de cuisson.

Le manège Mn est aussi pourvu d'un extracteur de galettes, comprenant une lame mobile conçue pour décoller chaque galette cuite sur chaque plaque de cuisson pour la transférer vers un poste d'emballage.

Le manège est encore équipé d'un appareil pour nettoyer et graisser chaque plaque de cuisson. L'appareil comprend un tissu imprégné d'une substance grasse telle qu'une huile végétale de cuisson.

Les moyens de manœuvre du manège Mn, le moteur d'entraînement à rotation Mrp du dispositif 100, sont raccordés à une unité de commande incluant un microprocesseur, une mémoire accessible par le microprocesseur dans laquelle est stocké un logiciel paramétrable pour régler le fonctionnement de ces différents actionneurs.

Le fonctionnement du manège Mn de fabrication de galettes se présente de la manière suivante. La trémie est remplie de pâte, Les plaques de cuisson Pc sont mises sous tension et la table tournante Tt est mise en mouvement. Quand les plaques sont chaudes, le doseur déverse un pâton sur une première plaque de cuisson Pc. Le vérin V soulève la partie B du bras pivotant Bpv et celui-ci est ramené, par l'intermédiaire du vérin Mm au-dessus de cette plaque de cuisson. A ce stade, le vérin V est purgé et le moteur rotatif pneumatique Mrp est mis en fonctionnement pour entraîner à rotation les deux racloirs Rl1 et Rl2 qui viennent travailler sur la plaque chauffante pour étaler le pâton et étaler et racler la pâte. Pendant le positionnement du plot conique dans un trou T correspondant, l'axe de l'arbre Ar du dispositif 100 oscille un peu permettant de supprimer l'œil au centre de la galette en cours de fabrication. La galette est fabriquée pendant la rotation de la table tournante Tt.

A l'issue de la fabrication de la galette, le vérin V soulève la partie B du bras pivotant Bpv et le vérin Mm le ramène en direction de la plaque de cuisson suivante sur laquelle a été déposé un pâton.

Pendant ce temps, la galette cuite a été décollée de la première plaque de cuisson, puis la plaque chauffante est nettoyée et graissée pour une prochaine utilisation.

Une temporisation à durée de déclenchement réglable est utilisée pour décompter le temps de descente du vérin V utilisé pour la descente du dispositif 100 afin de régler la durée de travail des deux racloirs Rl1 et Rl2. La vitesse de rotation du moteur rotatif pneumatique Mrp est également réglable pour l'adapter à un type de recette de galettes.

Le manège Mn pour fabriquer des galettes fonctionne de manière autonome. La qualité de fabrication des galettes s'apparente à celles fabriquées à la main par une personne qualifiée.

## Revendications

1. Dispositif (100) pour étaler une pâte alimentaire coulante sur une plaque de cuisson (Pc) pour fabriquer des galettes ou des crêpes, comprenant un arbre rotatif (Ar) destiné à être disposé de manière quasi perpendiculaire par rapport à la face de cuisson de la plaque de cuisson (Pc), une platine (Pn) fixée sur ledit arbre rotatif (Ar), ladite platine portant un moyen d'étalement et de raclage, au moins une butée (Mr) conçue pour prendre appui et rouler ou glisser sur la face chauffante de la plaque de cuisson, le moyen d'étalement et de raclage (Mt) comprenant au moins un racloir (Rl1) dont le bord libre de travail est rectiligne permettant d'une part, d'étaler un pâton préalablement déposé sur la face chauffante de ladite plaque de cuisson et, d'autre part, de racler l'épaisseur de pâte tant qu'elle demeure liquide de manière à redéposer une couche de matière en amont pour feuilleter la pâte et boucher les trous en reproduisant le geste d'une personne qualifiée dans l'art de faire des galettes ou des crêpes, **caractérisé en ce que** le dispositif (100) comprend deux racloirs, un premier racloir (Rl1) porté par ladite platine (Pn) et un second racloir (Rl2) porté sur une seconde platine (Pn2), le bord libre du premier racloir (Rl1) étant disposé de manière pratiquement sécante à l'axe de l'arbre rotatif (Ar), le bord intérieur du premier racloir (Rl1) s'étendant au moins jusqu'à l'axe dudit arbre et **en ce que** la seconde platine (Pn2) est reliée à la première platine (Pn1) par l'intermédiaire de moyens de réglage en hauteur, en considérant le dispositif (100) dans sa position d'utilisation.

2. Dispositif (100) selon la revendication 1, **caractérisé en ce que** les moyens de réglage comprennent des boulons (B1) reliant les deux platines et des ressorts (Rs) interposés entre les deux platines de sorte à procurer un montage flottant de la seconde platine (Pn2).

3. Dispositif (100) selon la revendication 1 ou 2, **caractérisé en ce que** ledit ou chaque racloir (R1) est disposé de manière inclinée par rapport à un plan tangent perpendiculairement à ladite butée (Mr) et dont l'angle est compris entre 20 degrés et 30 degrés.

4. Dispositif (100) selon l'une quelconque des revendications 1 à 3, **caractérisé en ce que** le second racloir (Rl2) est monté sur un support (Sp) assemblé sur la seconde platine (Pn2), par l'intermédiaire d'un moyen de fixation (Bl2) d'axe parallèle à celui de l'arbre rotatif (Ar), autorisant un réglage angulaire dudit support (Sp) par rapport à cette seconde platine (Pn2).

5. Dispositif (100) selon l'une quelconque des revendications précédentes, **caractérisé en ce que** ledit ou chaque racloir (Rl) est constitué d'une feuille de silicone ou est constitué de plusieurs feuilles de silicone superposées.

6. Dispositif (100) selon l'une quelconque des revendications 2 à 5, **caractérisé en ce qu'**une masselotte (Ms) est fixée sur le support (Sp) du second racloir (Rl2) de sorte que son bord libre puisse exercer une pression de travail prédéfinie sur la pâte en cours de cuisson pendant la fabrication de la galette ou de la crêpe.

7. Dispositif (100) selon l'une quelconque des revendications 1 à 6, **caractérisé en ce que** le second racloir (Rl2) est pourvu sur son bord latéral extérieur d'un arrêtoir (Rt) destiné à délimiter le périmètre d'étalement maximum de la pâte en définissant de la sorte le diamètre de la galette.

8. Dispositif (100) selon l'une quelconque des revendications précédentes, **caractérisé en ce qu'**il comprend trois butées respectivement constituées de trois roulements à billes (Mr1, Mr2 et Mr3) et dont les axes sont sécants à l'axe de l'arbre (Ar).

9. Dispositif (100) selon l'une quelconque des revendications précédentes, **caractérisé en ce que** l'arbre (Ar) est relié à un moyen d'entraînement à rotation (Mrp).

10. Ensemble comprenant un manège (Mn) pourvu :
- d'une table tournante (Tt) montée à rotation autour d'un axe vertical en considérant la position de fonctionnement dudit manège, la table portant une pluralité de plaques de cuisson (Pc) réparties à sa périphérie,
- un bras pivotant (Bpv) dont l'axe de rotation est coaxial avec celui de la table tournante (Tt), le bras pivotant (Bpv) comprenant une première partie (A) portant l'axe d'articulation dudit bras, une seconde partie (B) mobile verticalement par rapport à la première partie (A) par l'intermédiaire d'un moyen de guidage linéaire (Mg) et à l'encontre d'un moyen de manœuvre linéaire (V), **caractérisé en ce que** l'extrémité distale de la seconde partie (B) du bras pivotant (Bpv) porte un dispositif (100) selon l'une quelconque des revendications précédentes.

11. Ensemble selon la revendication 10, **caractérisé en ce que** la table tournante (Tt) est pourvue d'une couronne (Cn) centrée sur son axe de rotation, ladite couronne étant percée à sa périphérie d'une pluralité de trous (T) d'axe vertical qui sont répartis angulairement, la seconde partie (B) étant pourvue d'un plot conique qui vient, pendant le mouvement de descente de cette seconde partie (B), prendre place et se positionner dans un trou (T) correspondant, et **en ce que**, le bras pivotant (Bpv) est relié à un moyen de manœuvre conçu pour le faire pivoter angulairement autour de son axe de rotation.

## Patentansprüche

1. Vorrichtung (100) zum Verteilen eines fließfähigen Lebensmittelteigs auf einer Kochplatte (Pc) zur Zubereitung von Pfannkuchen oder Crêpes, umfassend eine Drehwelle (Ar), die dazu bestimmt ist, nahezu senkrecht zur Kochfläche der Kochplatte (Pc) angeordnet zu sein, eine an der Drehwelle (Ar) befestigte Platte (Pn), wobei die Platte ein Verteil- und Abstreifmittel und zumindest ein Auflager (Mr) umfasst, das dazu bestimmt ist, auf der Heizfläche der Kochplatte aufzuliegen und zu rollen oder zu gleiten, wobei das Verteil- und Abstreifmittel (Mt) zumindest einen Abstreifer (R11) umfasst, dessen freie Arbeitskante geradlinig ist und es ermöglicht, einerseits einen zuvor auf der Heizfläche der Kochplatte aufgebrachten Teig zu verteilen und andererseits die Teigdicke des Teigs abzutragen, solange er noch flüssig ist, um stromaufwärts erneut eine Materialschicht aufzubringen, um mehrere Teiglagen zu erhalten und alle Löcher zu verschließen, indem die Bewegung einer in der Herstellung von Pfannkuchen oder Crêpes geübten Person nachzuvollziehen, **dadurch gekennzeichnet, dass** die Vorrichtung (100) zwei Abstreifer umfasst, einen von der Platte (Pn) getragenen ersten Abstreifer (R11) und einen von der zweiten Platte (Pn2) getragenen zweiten Abstreifer (R12), wobei die freie Kante des ersten Abstreifers (R11) praktisch sekantenartig zur Achse der Drehwelle (Ar) angeordnet ist, wobei sich die Innenkante des ersten Abstreifers (R11) zumindest bis zur Achse der Welle erstreckt, und dass die zweite Platte (Pn2) mit der ersten Platte (Pn1) mittels Mitteln zur Einstellung der Höhe verbunden ist, wenn die Vorrichtung (100) in ihrer Gebrauchsstellung betrachtet wird.

2. Vorrichtung (100) nach Anspruch 1, **dadurch gekennzeichnet, dass** die Einstellmittel Schraubbolzen (B1), die die beiden Platten verbinden, und Federn (Rs), die so zwischen den beiden Platten angeordnet sind, dass sie eine schwebende Montage der zweiten Platte (Pn2) ermöglichen, umfassen.

3. Vorrichtung (100) nach Anspruch 1 oder 2, **dadurch gekennzeichnet, dass** der bzw. jeder Abstreifer (R1) schräg zu einer Tangentialebene angeordnet ist, die senkrecht zum Anschlag (Mr) verläuft und deren Winkel zwischen 20 Grad und 30 Grad beträgt.

4. Vorrichtung (100) nach einem der Ansprüche 1 bis 3, **dadurch gekennzeichnet, dass** der zweite Abstreifer (R12) an einem Träger (Sp) montiert ist, der mittels eines Befestigungsmittels (B12) mit einer zur Achse der Drehwelle (Ar) parallelen Achse an der zweiten Platte (Pn2) befestigt ist, was eine Winkeleinstellung des Trägers (Sp) in Bezug auf die zweite Platte (Pn2) ermöglicht.

5. Vorrichtung (100) nach einem der vorangehenden Ansprüche, **dadurch gekennzeichnet, dass** der bzw. jeder Abstreifer (R1) aus einem Silikonblatt oder aus mehreren übereinanderliegenden Silikonblättern gebildet ist.

6. Vorrichtung (100) nach einem der Ansprüche 2 bis 5, **dadurch gekennzeichnet, dass** am Träger (Sp) des zweiten Abstreifers (R12) ein Gewicht (Ms) befestigt ist, so dass seine freie Kante bei der Herstellung des Pfannkuchens bzw. Crêpes einen vordefinieren Arbeitsdruck auf den zu backenden Teig ausüben kann.

7. Vorrichtung (100) nach einem der Ansprüche 1 bis 6, **dadurch gekennzeichnet, dass** der zweite Abstreifer (R12) an seinem äußeren seitlichen Rand mit einem Anschlag (Rt) versehen ist, der dazu bestimmt ist, den maximalen Ausbreitungsumfang des Teigs zu begrenzen und somit den Durchmesser des Pfannkuchens zu definieren.

8. Vorrichtung (100) nach einem der vorangehenden Ansprüche, **dadurch gekennzeichnet, dass** sie drei Auflager umfasst, die aus drei Kugellagern (Mr1, Mr2 und Mr3) gebildet sind und deren Achsen die Achse der Welle (Ar) schneiden.

9. Vorrichtung (100) nach einem der vorangehenden Ansprüche, **dadurch gekennzeichnet, dass** die Welle (Ar) mit einem Drehantriebsmittel (Mrp) verbunden ist.

10. Baueinheit, umfassend ein Karussell (Mn) mit:
- einem Drehtisch (Tt), der um eine vertikale Achse in Bezug auf die Betriebsposition des Karussells montiert ist, wobei der Tisch mehrere an seinem Umfang verteilte Kochplatten (Pc) trägt,
- einem Schwenkarm (Bpv), dessen Drehachse koaxial zu der des Drehtischs (Tt) ist, wobei der Schwenkarm (Bpv) einen ersten Teil (A) umfasst, der die Gelenkachse des Arms trägt, und einen zweiten Teil (B), der in Bezug auf den ersten Teil (A) mittels eines linearen Führungsmittels (Mg) und gegen ein lineares Manövriermittel (V) vertikal bewegbar ist, **dadurch gekennzeichnet, dass** das distale Ende des zweiten Teils (B) des Schwenkarms (Bpv) eine Vorrichtung (100) nach einem der vorangehenden Ansprüche trägt.

11. Baugruppe nach Anspruch 10, **dadurch gekennzeichnet, dass** der Drehtisch (Tt) mit einem auf seiner Drehachse zentrierten Kranz (Cn) versehen ist, wobei der Kranz an seinem Umfang mit mehreren winkelmäßig verteilten Löchern (T) mit vertikaler Achse durchbrochen ist, wobei der zweite Teil (B) mit einem konischen Zapfen versehen ist, der sich bei der Abwärtsbewegung des zweiten Teils (B) in einem entsprechenden Loch (T) anordnet und positioniert, und dass der Schwenkarm (Bpv) mit einem Manövriermittel verbunden ist, das dazu bestimmt ist, ihn winkelmäßig um seine Drehachse zu drehen.

## Claims

1. Device (100) for spreading a pourable food mixture onto a cooking plate (Pc) to make flat cakes or pancakes, comprising a rotary shaft (Ar) intended to be disposed virtually perpendicularly with respect to the cooking face of the cooking plate (Pc), a turntable (Pn) fixed onto said rotary shaft (Ar), said turntable bearing a spreading and scraping means, at least one abutment (Mr) designed to bear and roll or slide on the heating face of the cooking plate, the spreading and scraping means (Mt) comprising at least one scraper (R11) whose free working edge is rectilinear that makes it possible, on the one hand, to spread a ball of dough previously deposited on the heating face of said cooking plate and, on the other hand, scrape the thickness of mixture as long as it remains liquid so as to redeposit a layer of material upstream to skim the mixture and plug the holes by reproducing the movement of a person skilled in the art in making flat cakes or pancakes, **characterized in that** the device (100) comprises two scrapers, a first scraper (R11) borne by said turntable (Pn) and a second scraper (R12) borne by a second turntable (Pn2), the free edge of the first scraper (R11) being disposed practically secant to the axis of the rotary shaft (Ar), the bottom edge of the first scraper (R11) extending at least to the axis of said shaft and **in that** the second turntable (Pn2) is linked to the first turntable (Pn1) via height adjusting means, considering the device (100) in its position of use.

2. Device (100) according to Claim 1, **characterized in that** the adjustment means comprise bolts (B1) linking the two turntables and springs (Rs) interposed between the two turntables so as to obtain a floating mounting of the second turntable (Pn2).

3. Device (100) according to Claim 1 or 2, **characterized in that** said or each scraper (R1) is disposed inclined with respect to a plane perpendicularly tangential to said abutment (Mr) and whose angle lies between 20° and 30°.

4. Device (100) according to any one of Claims 1 to 3, **characterized in that** the second scraper (R12) is mounted on a support (Sp) assembled on the second turntable (Pn2), via a fixing means (B12) of axis parallel to that of the rotary shaft (Ar), allowing an angular adjustment to said support (Sp) with respect to this second turntable (Pn2).

5. Device (100) according to any one of the preceding claims, **characterized in that** said or each scraper (R1) consists of a sheet of silicone or is composed of several superposed sheets of silicone.

6. Device (100) according to any one of Claims 2 to 5, **characterized in that** a counterweight (Ms) is fixed onto the support (Sp) of the second scraper (R12) such that its free edge can exert a predefined working pressure on the mixture being cooked while the flat cake or pancake is being made.

7. Device (100) according to any one of Claims 1 to 6, **characterized in that** the second scraper (R12) is provided, on its outer lateral edge, with a retainer (Rt) intended to delimit the maximum spreading perimeter of the mixture by thereby defining the diameter of the flat cake.

8. Device (100) according to any one of the preceding claims, **characterized in that** it comprises three abutments respectively composed of three ball bearings (Mr1, Mr2 and Mr3) whose axes are secant to the axis of the shaft (Ar).

9. Device (100) according to any one of the preceding claims, **characterized in that** the shaft (Ar) is linked to a rotational driving means (Mrp).

10. Assembly comprising a carousel (Mn) provided with:
- a revolving table (Tt) mounted to rotate about a vertical axis considering the position of operation of said carousel, the table bearing a plurality of cooking plates (Pc) distributed at its periphery,
- a pivoting arm (Bpv) whose axis of rotation is coaxial with that of the revolving table (Tt), the pivoting arm (Bpv) comprising a first part (A) bearing the articulation axis of said arm, a second part (B) that is vertically movable with respect to the first part (A) via a linear guiding means (Mg) and against a linear manoeuvring means (V), **characterized in that** the distal end of the second part (B) of the pivoting arm (Bpv) bears a device (100) according to any one of the preceding claims.

11. Assembly according to Claim 10, **characterized in that** the revolving table (Tt) is provided with a crown ring (Cn) centred on its axis of rotation, said crown ring being pierced at its periphery with a plurality of holes (T) of vertical axis which are distributed angularly, the second part (B) being provided with a conical stud which comes, during the lowering movement of this second part (B), to be placed and positioned in a corresponding hole (T), and **in that** the pivoting arm (Bpv) is linked to a manoeuvring means designed to make it pivot angularly about its axis of rotation.
